Europäisches Patentamt

European Patent Office

Office européen des brevets

(11) Publication number: **0 230 744 B1**

# EUROPEAN PATENT SPECIFICATION

(45) Date of publication of patent specification: **26.02.92**

(51) Int. Cl.⁵: **C08L 23/10**, C08L 23/08, C08L 21/00, //A61L2/04, (C08L23/10,23:08,21:00)

(21) Application number: **86309677.2**

(22) Date of filing: **11.12.86**

(54) Propylene polymer composition.

(30) Priority: **23.12.85 US 812582**

(43) Date of publication of application:
**05.08.87 Bulletin 87/32**

(45) Publication of the grant of the patent:
**26.02.92 Bulletin 92/09**

(84) Designated Contracting States:
**BE DE FR GB IT SE**

(56) References cited:
**EP-A- 0 041 747**

**CHEMICAL ABSTRACTS, vol. 83, 1975, page 112, abstract no. 60775e, Columbus, Ohio, US; SU-A-4 65 412 (ALL-UNION FURNITURE STRUCTURAL-DESIGN AND TECHNOLOGICAL INSTITUTE) 30-03-1975**

**CHEMICAL ABSTRACTS, vol. 85, 1976, page 51, abstract no. 109658b, Columbus, Ohio, US; & JP-A-76 47 930 (OKURA INDUSTRIAL CO., LTD) 24-04-1976**

**CHEMICAL ABSTRACTS, vol. 80, 1974, page**

**41, abstract 38013w, Columbus, Ohio, US; & JP-A-73 56 732 (NIPPON RIKA SEISHI CO., LTD) 09-08-1973**

**CHEMICAL ABSTRACTS, vol. 83, 1975, page 59, abstract no. 80406p, Columbus, Ohio, US; & JP-A-75 29 660 (ICHIKAWA, TOGORO) 16-07-1973**

(73) Proprietor: **REXENE PRODUCTS COMPANY (A Delaware Corporation)**
**2400 South Grandview Avenue**
**Odessa Texas 79766(US)**

(72) Inventor: **Lucas, Bennie M.**
**6301 Mecca**
**Odessa Texas 79762(US)**

(74) Representative: **Myerscough, Philip Boyd et al**
**J.A.Kemp & Co. 14, South Square Gray's Inn**
**London, WC1R 5EU(GB)**

## Description

The present invention relates to polymer compositions having remarkable strength and toughness properties, and in particular to blends of a propylene polymer, an ethylene-vinyl acetate polymer, a specific compatabilizer and optionally a synthetic rubber.

Parenteral solutions are used in fluid replacement, electrolyte replacement and are vehicles for drug medication. Solutions include blood plasma, platelets, red cells, kidney dialysis solutions, saline solutions and nutritional products. These solutions were initially bottled in glass, but with the introduction of the collapsible parenteral solution bag some years ago airborne contamination was significantly reduced since the flexible bags empty without outside air entering the system.

The general requirements of a polymer composition to be used in the manufacture of parenteral solution bags include flexibility, clarity, toughness at low temperatures, heat-sealability, good processability, moisture vapor permeability resistance and ability to be sterilized. The industry is presently employing a highly plasticized polyvinyl chloride (PVC) film for this purpose. Although this resin does meet most of the requirements, a material is preferred that has little or no plasticizer. Also, PVC film is not very resistant to moisture vapor permeability, and consequently a continuing loss of moisture of the parenteral solutions reduces their storage life considerably. Therefore, it is required that the bag be sealed within an overpouch made from a film resin designed to have a low water vapor transmission rate (WVTR).

In the manufacture of molded specialty bottles and containers, many of the above-mentioned properties are also desired although other properties might need to be different, e.g. the degree of stiffness might be varied from one application to another.

EP-A-41 747 relates to plastic products, e.g. Films, based on polypropylene and an ethylene-vinyl alcohol copolymer.

The present invention seeks to provide a polymer composition which is useful e.g. in the manufacture of strong and flexible parenteral solution bag films which are heat sealable and sterilizable, in the manufacture of squeeze bottles and containers, and in the manufacture of containers and of seals for co-called "tear tab" containers. Other aspects of the invention relates to monolayer and coextruded films suitable for manufacture of IV bags.

In accordance with the present invention there is provided a polymer composition comprising

(a) 10 to 98 wt % of a propylene polymer;
(b) 1 to 60 wt % of an ethylene-vinyl acetate copolymer;
(c) 0 to 60 wt % of a synthetic rubber; and
(d) 0.005 to 1.5 wt %, based on the total weight of (a), (b) and (c), of a polyterpene resin.

The propylene polymer component (a) can be a propylene homopolymer, a random copolymer of propylene and ethylene containing from 0.5 to 6 wt % polymerized ethylene and preferably from 1 to 5 wt % of polymerized ethylene, or a mixture of the homopolymer and copolymer.

The ethylene-vinyl acetate copolymer (b) should be a high molecular weight resin containing between 3 and 25 wt %, preferably between 4 and 12 wt %, polymerized vinyl acetate groups.

The synthetic rubber component (c), if present, is suitably selected from butyl rubber, polybutadiene, polyisobutene, styrene-butadiene rubber, ethylene-propylene rubber and ethylene-propylene-diene terpolymer (EPDM).

The polyterpene resin compatabilizer (d) is a thermoplastic polymer produced by the polymerization of terpene hydrocarbons consisting primarily of either beta-pinene or dipentene. These resins are commercially available and have been used as tackifiers and adhesive promoters.

For heat sterilizable film applications the preferred composition is a blend comprising:

(a) 10 to 50 wt % of the propylene polymer;
(b) 10 to 60 wt % of the ethylene-vinyl acetate copolymer;
(c) 10 to 60 wt % of the synthetic rubber, and
(d) 0.01 to 1.5 wt %, based on the total weight of (a), (b) and (c), of the polyterpene resin.

The most preferred ranges for the four components are respectively:

(a) 15 to 35 wt %;
(b) 30 to 50 wt %;
(c) 30 to 50 wt %, and
(d) 0.1 to 1 wt % based on the total weight of (a), (b) and (c).

One optional component of the resin blend is an agent added in a quantity effective to produce films of improved clarity. Examples of suitable agents are sodium benzoate, dibenzylidene sorbitol and sorbitan monooleate. Usually the agents are added in quantities between 0.1 and 2 wt %, based on the total weight of components (a) to (c).

2

The polymer composition or blend of the present invention is easily processable into blown or cast film products which, in addition to high clarity, exhibit other desirable properties such as flexibility, toughness at low temperatures and heat-sealability. Also, the films have good resistance to moisture vapor permeability and can be steam sterilized at 121 °C without significantly affecting their physical properties in a detrimental way. Finally, the films contain no additives, which would prevent their use in food or medical applications, either in direct or indirect contact.

The film should usually have a thickness from 76 to 254 $\mu$m (3 to 10 mils) for the manufacture of collapsible, flexible parenteral solution bags.

In order to improve the read-through clarity of the film prepared from the blend, it is sometimes preferably to coextrude the blend with a propylene polymer, such as the propylene polymer component (a), to produce a composite film of at least two layers. A three-layered composite film with propylene polymer outer layers is within the scope of the invention. For best heat-sealability it is preferred that a two-layered composite film be employed in the manufacture of IV bags with the propylene polymer as the outside film layers.

The blend is also useful in the manufacture of flexible containers such as squeeze bottles or tubes. The bottles or tubes can be injection molded or blow molded using any conventional techniques and can be used for containment and dispersion of a variety of viscous materials such as salves, ointments and lotions. Foods and condiments are also packaged with advantage in the squeeze containers.

Another embodiment of the present invention relates to resins useful in the manufacture of more rigid bottles and containers having improved tear resistance. Specifically, these resins are particularly desirable for the manufacture of tear tab containers, i.e. containers which are formed, filled and sealed in one manufacturing operation. The seals of the filled containers are broken by manual pulling on the tear tab thereby releasing the container top from the container. It is of real importance that there should be no failures such as breaking or splitting of the tear tab during the opening of the container.

The preferred polymer composition for use in the manufacture of containers of improve tear resistance comprises:

(a) 90 to 99 wt % of the propylene polymer;
(b) 1 to 10 wt % of the ethylene-vinyl acetate copolymer;
(c) 0 to 9 wt % of the synthetic rubber; and
(d) 0.005 to 1.5 wt %, based on the total weight of (a), (b) and (c), of the polyterpene resin.

The most preferred ranges for the four components are respectively:
(a) 92 to 98 wt %;
(b) 1.5 to 7 wt %;
(c) 1.5 to 7 wt %; and
(d) 0.01 to 1.0 wt %, based on the total weight of (a), (b) and (c).

The present invention will be further described by reference to the following Examples.

EXAMPLE 1

A blend was prepared of 18.2 kg (40 pounds) "Polysar"® butyl rubber XC 961, 18.2 kg (40 pounds) of an ethylene/vinyl acetate copolymer (containing about 9.0 wt % vinyl acetate groups), 9.1 kg (20 pounds) of a random copolymer of propylene and ethylene (containing about 2.3 wt % ethylene groups) and 0.23 kg (0.5 pounds) of "Zonarez"® 7115, a polyterpene resin based primarily on dipentene. The blend was used in preparing a blown film of 178 $\mu$m (7 mil) thickness. It had excellent toughness, was easily heat-sealable and was flexible. Pouches made from these films were filled with water, heat-sealed and tossed in the air to simulate a 3m (10 foot) drop. All pouches survived at least 6 drops at ambient temperature.

EXAMPLE 2

The blend of Example 1 was coextruded with the random propylene/ethylene copolymer component into a 203 $\mu$m (8 mil) three-layered film composite with the random copolymer as the outside layers.

Table 1 lists the physical properties of the film which also had excellent see-through properties.

TABLE 1

| | Machine Direction | Transverse Direction |
|---|---|---|
| Tensile @ Yield, MPa (psi) | 8.48 (1230) | 5.45 (790) |
| Tensile @ Break, MPa (psi) | 17.7 (2570) | 9.17 (1330) |
| Elongation @ Break, % | 600 | 570 |
| 1% Secant Modulus, MPa (psi) | 142 (20600) | 83.4 (12100) |
| Dart Drop (Method A), gms | >1600[1] | |
| Haze, % | 25.0 | |
| Gloss @ 60°, % | 44 | |
| Yellowness Index (Transmission) | 1.5 | |

[1] No breaks were obtained at maximum weight.

EXAMPLES 3 - 5

These blends suitable for tear tab bottle production were prepared from the components of Example 1 in the proportions listed in Table 2, which also shows the results of tests performed on the compositions.

TABLE 2

| Example | | | |
|---|---|---|---|
| Propylene Random Copolymer -kg (lbs) | 43 (95.0) | 43.98(96.87) | 42.56(93.75) |
| Ethylene/Vinyl Acetate -kg (lbs) | 2 (4.5) | 0.71 (1.56) | 1.42 (3.12) |
| Butyl Rubber -kg (lbs) | --- | 0.71 (1.56) | 1.42 (3.12) |
| Polyterpene -kg (lbs) | 0.23(0.5) | 0.007(0.015) | 0.014(0.03) |
| Flexural Modulus, MPa, (kpsi) | 862(125) | 889(129) | 876 (127) |
| Tensile @ Yield, MPa (psi) | 26.0(3770) | 26.7 (3870) | 25.5 (3700) |
| Elongation @ Break, % | >700 | >700 | >700 |
| HDT @ 455 kPa (66 psi) °C | 85 | 87 | 86 |
| Izod, J/cm (ft-lbs/in) | 1.17 (2.2) | 0.96 (1.8) | 1.23 (2.3) |
| Panel Tear Test (ASTM-D 1938) | | | |
| Panel Thickness, range in mm (inches) | 0.61-0.81(0.024-0.032) | 0.61-0.81(0.024-0.032) | 0.56-0.76(0.022-0.030) |
| Initial force -kg (lbs) | 1.54 (3.4) | 1.63 (3.6) | 1.45 (3.2) |
| Maximum Force -kg (lbs) | 7.7 (17.0) | 9.3 (20.5) | 8.2 (18.0) |

No failures were observed in tests opening sealed bottles by pulling the tear tabs.

**Claims**

1.  A polymer composition comprising

5

(a) 10 to 98 wt % of a propylene polymer;

(b) 1 to 60 wt % of an ethylene-vinyl acetate copolymer;

(c) 0 to 60 wt % of a synthetic rubber; and

(d) 0.005 to 1.5 wt %, based on the total weight of (a), (b) and (c), of a polyterpene resin.

2. A composition according to claim 1 wherein the propylene polymer is propylene homopolymer, a random copolymer of propylene and ethylene containing from 0.5 to 6 wt % polymerized ethylene, or a mixture of said homopolymer and copolymer.

3. A composition according to claim 1 or 2 wherein the ethylene-vinyl acetate copolymer contains between 3 and 25 wt % polymerised vinyl acetate groups.

4. A composition according to claim 1, 2 or 3 for use in the manufacture of sterilizable, heat-sealable film comprising 10 to 50 wt % of component (a), 10 to 60 wt % of component (b), 10 to 60 wt % of component (c) and 0.01 to 1.5 wt %, based on the total weight of (a), (b) and (c), of component (d).

5. A composition according to claim 4 comprising 15 to 35 wt % of component (a), 30 to 50 wt % of component (b), 30 to 50 wt % of component (c), and from 0.1 to 1 wt % of component (d) based on the total weight of (a), (b) and (c).

6. A composition according to claim 1, 2 or 3 for use in the manufacture of tear tab bottles comprising 90 to 99 wt % of component (a), 1 to 10 wt % of component (b), 0 to 9 wt % of component (c), and 0.005 to 1.5 wt %, based on the total weight of (a), (b) and (c), of component (d).

7. A composition according to claim 6, comprising 1.5 to 7 wt % of component (b), 1.5 to 7 wt % of component (c), and 0.01 to 1 wt % of component (d) the amount of component (d) being based on the total weight of (a), (b) and (c).

8. A composition according to any one of the preceding claims wherein the synthetic rubber is butyl rubber.

9. A composition according to any one of the preceding claims wherein the polyterpene resin is polymerized primarily from dipentene.

10. A sterilizable, heat-sealable film or flexible container produced from a composition as claimed in claim 4 or 5.

11. A composite film comprising a first layer produced from a composition as claimed in claim 4 or 5 and a second layer coextruded with the first layer and comprised of the propylene polymer of component (a).

12. A composition film according to claim 11 further comprising a third layer of the propylene polymer of component (a) coextruded with the first and second layers and positioned to enclose the first layer between said second and third layers.

13. A tear tab container produced from a composition as claimed in claim 6 or 7.

**Revendications**

1. Composition à base de polymère comprenant :

(a) 10 à 98 % en poids d'un polymère de propylène ;

(b) 1 à 60 % en poids d'un copolymère éthylèneacétate de vinyle ;

(c) 0 à 60 % en poids d'un caoutchouc synthétique ; et

(d) 0,005 à 1,5 % en poids, calculé sur le poids total de (a), (b) et (c) d'une résine de polyterpène.

2. Composition selon la revendication dans laquelle le polymère de propylène est un homopolymère de propylène, un copolymère aléatoire de propylène et d'éthylène contenant de 0,5 à 6 % en poids d'éthylène polymérisé, ou un mélange desdits homopolymère et copolymère.

**3.** Composition selon les revendications 1 ou 2 dans laquelle le copolymère éthylène-acétate de vinyle contient de 3 à 25 % de groupements acétate de vinyle polymérisés.

**4.** Composition selon les revendications 1, 2 ou 3 pour l'utilisation dans la fabrication de films stérilisants, soudables à chaud comprenant de 10 à 50 % en poids de composé (a), 10 à 60 % en poids de composé (b), 10 à 60 % en poids de composé (c) et 0,01 à 1,5 % en poids, calculé d'après le poids total de (a), (b) et (c), de composé (d).

**5.** Composition selon la revendication 4 comprenant 15 à 35 % en poids de composé (a), 30 à 50 % en poids de composé (b), 30 à 50 % en poids de composé (c) et de 0,1 à 1 % en poids de composé (d), calculé sur le poids total de (a), (b) et (c).

**6.** Composition selon les revendications 1, 2 ou 3 utilisée dans la fabrication de bouteilles à languette de déchirage comprenant 90 à 99 % en poids de composé (a), 1 à 10 % en poids de composé (b), 0 à 9 % en poids de composé (c) et de 0,005 à 1,5 % en poids de composé (d), calculé d'après le poids total de (a), (b) et (c).

**7.** Composition selon la revendication 6 comprenant 1,5 à 7 % en poids de composé (b), 1,5 a 7 % en poids de composé (c) et de 0,01 à 1 % en poids de composé (d), la quantité de composé (d) étant calculé sur le poids total de (a), (b) et (c).

**8.** Composition selon n'importe laquelle des revendications précédentes dans laquelle le caoutchouc synthétique est le caoutchouc butyle.

**9.** Composition selon n'importe laquelle des revendications précédentes dans laquelle la résine de polyterpène est polymérisée principalement à partir du dipentène.

**10.** Film stérilisable, soudable à chaud ou récipient souple produit avec une composition telle que revendiquée dans les revendications 4 ou 5.

**11.** Film composite comprenant une première couche produite à partir d'une composition telle que revendiquée dans les revendications 4 ou 5 et une seconde couche coextrudée avec la première couche et composée de polymère de propylène du composé (a).

**12.** Composition sous forme de film selon la revendication 11 comprenant en outre une troisième couche de polymère de propylène du composé (a) coextrudée avec les première et deuxième couches et positionnée de telle façon que la première couche soit comprise entre lesdites deuxième et troisième couches.

**13.** Récipient à languette de déchirage à partir d'une composition telle que revendiquée dans les revendications 6 ou 7.

**Patentansprüche**

**1.** Polymerzusammensetzung, die

(a) 10 bis 98 Gew.% Propylenpolymer,
(b) 1 bis 60 Gew.% Ethylen-Vinylacetat-Copolymer,
(c) 0 bis 60 Gew.% synthetischen Kautschuk und
(d) 0,005 bis 1,5 Gew.%, bezogen auf das Gesamtgewicht von (a), (b) und (c), Polyterpenharz umfaßt.

**2.** Zusammensetzung nach Anspruch 1, bei der das Propylenpolymer ein Propylenhomopolymer, ein statistisches Copolymer von Propylen und Ethylen mit 0,5 bis 6 Gew.% polymerisiertem Ethylen oder eine Mischung des Homopolymeren und Copolymeren ist.

**3.** Zusammensetzung nach Anspruch 1 oder 2, bei der das Ethylen-Vinylacetat-Copolymer3 bis 25 Gew.% polymerisierte Vinylacetatgruppen enthält.

**4.** Zusammensetzung nach Anspruch 1, 2 oder 3 zur Verwendung bei der Herstellung von sterilisierbarer, heißsiegelbarer Folie, die 10 bis 50 Gew.% Komponente (a), 10 bis 60 Gew.% Komponente (b), 10 bis 60 Gew.% Komponente (c) und 0,01 bis 1,5 Gew.%, bezogen auf das Gesamtgewicht von (a), (b) und (c), Komponente (d) umfaßt.

**5.** Zusammensetzung nach Anspruch 4, die 15 bis 35 Gew.% Komponente (a), 30 bis 50 Gew.% Komponente (b), 30 bis 50 Gew.% Komponente (c) und 0,1 bis 1 Gew.%, bezogen auf das Gesamtgewicht von (a), (b) und (c), Komponente (d) umfaßt.

**6.** Zusammensetzung nach Anspruch 1, 2 oder 3 zur Verwendung bei der Herstellung von Flaschen mit Aufreißstreifen, die 90 bis 99 Gew.% Komponente (a), 1 bis 10 Gew.% Komponente (b), 0 bis 9 Gew.% Komponente (c) und 0,005 bis 1,5 Gew.%, bezogen auf das Gesamtgewicht von (a), (b) und (c), Komponente (d) umfaßt.

**7.** Zusammensetzung nach Anspruch 6, die 1,5 bis 7 Gew.% Komponente (b), 1,5 bis 7 Gew.% Komponente (c) und 0,01 bis 1 Gew.% Komponente (d) umfaßt, wobei die Menge von Komponente (d) auf das Gesamtgewicht von (a), (b) und (c) bezogen ist.

**8.** Zusammensetzung nach einem der vorhergehenden Ansprüche, bei der der synthetische Kautschuk Butylkautschuk ist.

**9.** Zusammensetzung nach einem der vorhergehenden Ansprüche, bei dem das Polyterpenharz in erster Linie aus Dipenten polymerisiert worden ist.

**10.** Sterilisierbare, heißsiegelbare Folie oder flexibler Behälter hergestellt aus einer Zusammensetzung gemäß Anspruch 4 oder 5.

**11.** Verbundfolie, die eine erste Schicht, die aus einer Zusammensetzung gemäß Anspruch 4 oder 5 hergestellt worden ist, und eine zweite Folie, die mit der ersten Schicht coextrudiert worden ist und aus dem Propylenpolymer von Komponente (a) besteht, umfaßt.

**12.** Verbundfolie nach Anspruch 11, die ferner eine dritte Schicht aus dem Propylenpolymer von Komponente (a) umfaßt, die mit der ersten und der zweiten Folie coextrudiert worden ist und so angeordnet ist, daß die erste Schicht zwischen der zweiten und der dritten Schicht eingeschlossen ist.

**13.** Behälter mit Aufreißstreifen hergestellt aus einer Zusammensetzung gemäß Anspruch 6 oder 7.